# EUROPEAN PATENT APPLICATION

(11) **EP 3 109 810 A1**
(43) Date of publication of application: **28.12.2016**
(21) Application number: 16175950.1
(22) Date of filing: 23.06.2016
(51) Int. Cl.: G06Q 10/06

(54) **ELECTRONIC ASSET DELIVERY AND EVENT TRACKING SYSTEM**

(30) Priority: 24.06.2015 US 201514749064
(71) Applicant: Sharethrough Inc., San Francisco, California 94111 (US)
(72) Inventor: Ruggiero, Michael, San Francisco, CA California 94111 (US); Cardullo, Russell, San Francisco, CA California 94111 (US)
(74) Representative: Dendorfer, Claus

(57) **Abstract**

An asset server receives electronic asset data from electronic asset data sources. The electronic asset server receives a request to provide a client with an electronic asset. Based on the request, and optionally using a bidding system, the electronic asset server selects a particular asset described by the electronic asset data, from a particular asset data source, to provide to the client. The electronic asset server stores a delivery record in a repository of delivery records, indicating the sending of data for the particular asset to the client. The electronic asset server receives an event message from the client describing an event that occurred at the client with respect to the particular asset. A correlation component correlates the event message to the corresponding delivery record, if possible. Based on the correlation, a notification component sends a notification message indicating the occurrence of the event to the particular asset data source.

## Description

### TECHNICAL FIELD

Embodiments relate generally to delivery of electronic assets, and, more specifically, to techniques for correlating and tracking the delivery of electronic assets.

### BACKGROUND

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

There are a large variety of systems for delivering electronic assets, such as units of textual and/or multimedia content, to client devices, such as personal computers, mobile devices, phones, tablets, and so forth. Within these systems, a variety of tracking mechanisms exist for tracking the delivery of electronic assets. However, many asset providers are less interested in whether the electronic assets are delivered, and more interested in whether events occur with respect to those assets.

In systems where the asset provider controls the delivery, presentation, and monitoring mechanisms, tracking occurrences of events with respect to assets is fairly straightforward. However, event tracking becomes increasingly complicated in modem asset delivery systems. For instance, some asset delivery services are operated by a third party on behalf of multiple different asset providers. These asset providers may wish to know when events occurred within a reasonable time of the events occurring, so as to adjust their interactions with a bidding component, asset submission component, or other component of the asset delivery service. Also, some asset delivery services are configured to insert assets within viewing contexts that they do not completely control, such as within third-party web pages or other documents, or third-party software applications. Even further complications may arise when the asset delivery service is configured to deliver "custom" assets that are dynamically generated or templated to match viewing contexts at the targeted clients.

### BRIEF DESCRIPTION OF THE DRAWINGS

The present invention is illustrated by way of example, and not by way of limitation, in the figures of the accompanying drawings and in which like reference numerals refer to similar elements and in which:
FIG. 1 is an illustrative view of various aspects of an example asset delivery system in which the techniques described herein may be practiced;
FIG. 2 is an illustrative view of various aspects of an example event correlation and notification system in which the techniques described herein may be practiced;
FIG. 3 illustrates an example flow for delivering and tracking assets;
FIG. 4 illustrates an example flow for delivering and tracking assets utilizing a bid-based asset selection technique; and
FIG. 5 is block diagram of a computer system upon which embodiments of the invention may be implemented.

### DETAILED DESCRIPTION

In the following description, for the purposes of explanation, numerous specific details are set forth in order to provide a thorough understanding of the present invention. It will be apparent, however, that the present invention may be practiced without these specific details. In other instances, well-known structures and devices are shown in block diagram form in order to avoid unnecessarily obscuring the present invention.

Embodiments are described herein according to the following outline:
1.0. General Overview
2.0. Structural Overview
   2.1. Assets
   2.2. Asset Data Sources
   2.3. Asset Server
   2.4. Asset Selector
   2.5. Bid / Delivery Logging
   2.6. Events
   2.7. Event Correlator
   2.8. Event Notifier
   2.9. Miscellaneous
3.0. Functional Overview
   3.1. Example General Flow
   3.2. Example Bidding System Flow
4.0. Example Embodiments
5.0. Implementation Mechanism-Hardware Overview
6.0. Extensions and Alternatives

### 1.0. GENERAL OVERVIEW

Approaches, techniques, and mechanisms are disclosed for selecting and delivering electronic assets, and tracking events related to those electronic assets. According to one embodiment, an asset server receives electronic asset data from electronic asset data sources. The electronic asset data describes a plurality of electronic assets. The electronic asset server further receives a request to provide a client device with an electronic asset. Based on the request, the electronic asset server selects a particular asset of the plurality of electronic assets, from a particular asset data source, to provide to the client device. The electronic asset server sends particular asset data for the particular asset to the client device. The electronic asset server further stores a delivery record in a log of delivery records. The delivery record indicates the sending of the particular asset data for the particular asset. The electronic asset server receives an event message from the client device describing an event that occurred at the client device with respect to the particular asset. A correlation component reads the event message and correlates the event message to the corresponding delivery record, if possible. Based on the correlated event message and delivery record, a notification component sends a notification message indicating the occurrence of the event to the particular asset data source.

According to an embodiment, the electronic asset may be a custom asset that is generated and/or templated dynamically based on a viewing context at the client device. According to an embodiment, the selection of the electronic asset may be, at least in part, based upon bids solicited via a bidding system from the electronic asset sources. According to an embodiment, the notification message notifies the particular asset data source that a particular bid, corresponding to the particular asset, is a winning bid. According to an embodiment, no notification message is sent for winning bids to which no event message can be correlated within a specified period of time. According to an embodiment, a notification message may also be sent after a specified period of time to indicate when no event message has been correlated to a winning bid.

According to an embodiment, an electronic asset server receives an electronic asset request to provide a client device with an electronic asset selected by the electronic asset server. The request includes context data indicating a context in which the electronic asset is to be presented. The electronic asset server sends one or more bid solicitation requests to electronic asset sources. The bid solicitation requests indicate one or more aspects of the context to the electronic asset sources. The electronic asset server receives bid data from at least one of the electronic asset sources. The bid data collectively describes a plurality of bids. Each bid includes at least a bid identifier and a bid value. Each bid further includes or references electronic asset data describing a specific electronic asset associated with the bid identifier of the bid.

Based at least partially on the bid data, the electronic asset server selects a particular electronic asset to provide to the client device. The particular electronic asset is described by particular asset data associated with a particular bid value received from a particular electronic asset source. The electronic asset server stores, in a repository of bid records, a particular bid record that includes at least a particular bid identifier for the selected particular electronic asset.

The electronic asset server receives an event message indicating the occurrence of an event at the client device with respect to the particular electronic asset. Based on one or more identifiers in the event message, the electronic asset server determines whether the event message correlates to any of the bid records in the repository of bid records. In response to correlating the particular winning bid record to the event message, the electronic asset server sends a notification message comprising the particular bid identifier to the particular electronic asset source.

In other aspects, the invention encompasses a computer apparatus and a computer-readable medium configured to carry out the foregoing steps.

### 2.0. STRUCTURAL OVERVIEW

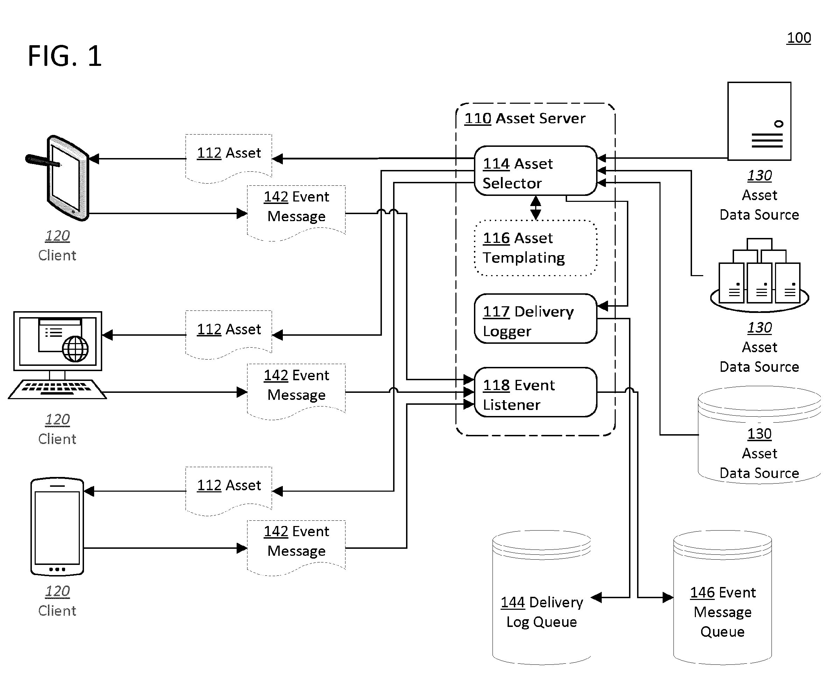

FIG. 1 is an illustrative view of various aspects of an example asset delivery system 100 in which the techniques described herein may be practiced, according to an embodiment.

### 2.1. ASSETS

System 100 comprises various components configured for generation, delivery, tracking, and/or other uses of assets 112, as described herein. Assets 112 are units of data, including one or more images, videos, text snippets, computer code, and/or other content. In an embodiment, certain assets 112 may be interactive assets, in that the assets 112 include instructions or other data that causes the assets 112 to be associated with interactive interface controls. Activation of such controls by clicking, touching, timeouts, or other events, may result in a computing device performing various actions, such as downloading and/or presenting content from a resource locator identified by or otherwise associated with the asset 112.

System 100 includes clients 120. Clients 120 may be devices such as mobile phones, desktop computers, tablet computers, media players, televisions, kiosks, wearable electronics, and so forth. Each client 120 is configured to receive assets 112 and present those assets 112 to one or more users of the client 120. For instance, a client 120 may execute a software application, such as a mobile application, that communicates via a special application program interface (API), to retrieve assets 112 from a server such as asset server 110. As another example, a client 120 may execute a web browser that a user instructs to download assets 112 from a server, or that is instructed to download and present an asset by code within a web page or document requested by the user.

A client 120 may perform a variety of actions with or relative to an asset 112, such as downloading, storing, displaying in a viewport, playing, executing, editing, hyperlinking, and so forth. The exact set of actions may vary depending on the type of asset 112. For instance, an asset 112 may include video data that a client 120 is configured to automatically play upon loading, as well as instructions to load a new asset 112 or other resource when a user touches certain areas of a screen on which the video is playing. As another example, an asset 112 may be text and/or images formatted in Hyper-Text Markup Language (HTML). As yet another example, an asset 112 may include JavaScript or other computer code that instructs a client 120 to dynamically arrange and/or format certain fields of data of the asset 112 so as to generate a presentation of the asset 112. Such computer code may even instruct the client 120 as to a location, within a web page, document, or screen, that the asset 112 should be dynamically inserted, and/or a specific time at which the asset 112 should be presented. Some examples of suitable assets 112 are described, without limitation, in U.S. Application Serial Number 14/095,163, filed December 3, 2013, the contents of which are hereby incorporated by reference for all purposes as if set forth in their entirety.

### 2.2. ASSET DATA SOURCES

Data for assets 112 are stored initially at one or more data sources 130. Each asset data source 130 may include one or more databases, file systems, computer-based servers, server-based applications, or any other suitable component. Some or all of asset data sources 130 may be operated by entities other than the operator of asset server 110. For instance, asset server 110 may be operated by an asset delivery entity that delivers assets 112 to clients 120 on behalf of operators of asset data sources 130. Asset server 110 may publish information about an API, and/or other protocols, by which the operators of asset data sources 130 may configure asset data sources 130 to communicate their respective asset data to asset server 110.

Some or all of data sources 130 may store assets 112 in formats that are ready for presentation at clients 120 "as is"-in other words, in formats that may be rendered at a client 120 without further modification by asset server 110 or the client 120. Such assets 112 are referred to herein as "presentable assets." Some or all of data sources 130 may also or instead store fields of asset data that describe certain aspects of an asset 112. For instance, an asset data source 130 may store, for a given asset 112, data such as a title, description, uniform resource locator (URL), and/or thumbnail image. From these data fields, an asset templating component 116 on asset server 110, and/or the client 120 itself, may be configured to dynamically generate or format a presentable asset 112 for delivery to a client 120.

Asset server 110 includes one or more communication interfaces by which asset server 112 is communicatively coupled via one or more networks to the one or more asset data sources 130. Asset server 110 may request data for assets 112 from asset data sources 130, and/or asset data sources 130 may voluntarily send data for assets 112 to asset server 110. When sending data for an asset 112 to asset server 110, whether or not the asset 112 is already in presentable form, an asset data source 130 will generally associate one or more identifiers with the asset 112, such as an internal asset identifier, URL, record number, bid identifier, etc. The one or more identifiers are uniquely associated with the asset 112.

### 2.3. ASSET SERVER

System 100 comprises an asset server 110. Asset server 110 is a system of one or more computing devices that collectively perform a variety of functions described herein related to assets 112. One function performed by asset server 110 is sending assets 112 to clients 120. To this end, asset server 110 includes one or more communication interfaces by which asset server 112 is communicatively coupled via one or more networks to clients 120. Asset server 110 receives requests to provide assets 112 for use at clients 120, either directly from clients 120, or indirectly via one or more intermediary components, such as web servers, application servers, file servers, gateways, routers, and so forth. The requests may or may not, depending on the embodiment and/or context, identify which asset 112 is requested. Responsive to the requests, the asset server 110 transmits assets 112 either directly or indirectly to the client 120.

Asset server 110 may further comprise a variety of components to provide the assets 112 to clients 120. For instance, asset server 110 may include an asset database, asset cache, and/or asset metadata store, in which certain assets 112 and/or corresponding data from data sources 130 may be stored locally for faster retrieval. In certain embodiments, asset server 110 may include an asset templating component 116 configured to dynamically generate, format, customize, and/or configure certain assets 112, based on information about the contexts in which targeted clients 120 will present those assets 112. This may allow, for instance, asset server 110 to deliver "custom" assets 112 to a targeted client 120, having formats, styles, arrangements of data, and/or other presentation aspects that appear to match those of other content units within documents, web pages, applications, and/or other contexts in which the targeted client 120 will present the assets 112.

For instance, asset templating component 116 may include or be coupled to a client profiler, asset template generator, template cache, and/or an asset generator. These subcomponents and/or other suitable subcomponents may allow the asset templating component 116 to generate a presentable asset 112 based on applying a template to various fields of asset data. In at least one embodiment, some or all of the templates are dynamically generated in "real-time" (i.e. at the time the asset 112 to which the template will apply is requested) based upon information from clients 120 about the contexts in which the assets will be displayed. Some examples of asset servers 110 that include such components are described, without limitation, in the above referenced U.S. Application Serial Number 14/095,163.

### 2.4. ASSET SELECTOR

Asset server 110 may further include an asset selector 114 that selects which asset 112 to provide in response to client requests that do not identify a specific asset 112 to retrieve. The asset server 110 may select a specific asset 112 based on a variety of suitable factors. In some embodiments, an asset 112 is selected entirely at random, and/or using a round-robin approach.

In other embodiments, client profile data is collected for some or all of clients 130 using client request data, browser cookies, event logs, user-specified account data, behavioral logs, and/or any other suitable mechanisms. Client profile data may indicate, for instance, technical characteristics of the client 120, such as screen size or device type, and/or traits of a user that is believed to be operating the device, such as previous assets in which the user expressed interest or user demographic information. Meanwhile, some or all of assets 112 may be associated with asset profile data that describes, for a given asset 112, characteristics of clients or users to whom the asset 112 is targeted. Asset selector 114 may compare the asset profile data to the client profile data to identify suitable assets 112 to provide a client 120. A wide variety of suitable algorithms and/or functions to perform such a comparison may be generated by users and/or machine-learning mechanisms.

Asset profile data may be provided by asset data sources 130 with assets 112, and/or continuously generated or adapted by asset server 110, based on various metrics indicating how well an asset 112 is performing relative to criteria specified by the asset data sources 130. Such metrics may include, for instance, how often certain events have occurred with respect to the assets 112, or similar assets 112, when previously served to clients 130, or defined sub-groups thereof.

In other embodiments, asset selector 114 may select assets 112 based on bids from some or all of asset data sources 130. That is, asset selector 114 includes a bidding system that collects "bids" from asset data sources 130. The bids may specify a value that that the corresponding asset data sources attach to the delivery of their assets 112, and/or to the occurrence of certain events with respect to their assets 112. The bid may be, for instance, a monetary amount, or a value that corresponds to a monetary amount. While in some embodiments, the asset 112 with the highest bid may always be chosen, asset selector 114 need not necessarily be so configured-for instance, asset selector 114 may also use a variety of other factors to select which asset 112 to deliver.

Any suitable bidding system may be utilized. For instance, in one bidding system, a bid for an asset 112 may be specified as part of campaign metadata associated with that asset 112 when the asset 112, or the corresponding data thereof, is initially uploaded to the asset server 110. This bid may then remain the same for a duration of time during which the asset server 110 is requested to deliver the asset 112 to clients 120. In some such embodiments, the asset server 110 may provide a mechanism to change this bid at any given time. The asset server 110 may also provide reporting mechanisms that provide asset data sources 130 with asset performance data based upon which software at the asset data sources 130 may determine whether to adjust a bid for a given asset 112.

In another embodiment, bids may be specified by asset data sources 130 in "real-time." That is, whenever a client 120 requests that asset server 110 provide an unspecified asset 112, the asset selector 114 requests a bid from each asset data source 130 participating in the bidding system. Each asset source 130 may respond with at least one asset identifier and corresponding bid. In some embodiments, each asset source 130 may submit any number of asset identifiers and corresponding bids. To speed up the bidding process, the asset selector 114 may only accept bids received within a specific period of time, and/or may utilize pre-defined default bids specified for assets 112 (e.g. using campaign metadata) when no real-time bid is received.

In an embodiment, bids may be context-specific. For instance, a bid may be associated with any number of targeted characteristics, such as profiled demographics, client-type, time of day, client address, client screen size, event history, and so forth. The targeted characteristics may or may not be synonymous with asset profile data, as described above. The bid may only be accepted if the targeted characteristics are met, and/or the bid may be weighted based upon how closely the targeted characteristics match the client profile data. In an embodiment, multiple bids may be specified for a single asset 112, each for different sets of targeted characteristics.

In real-time bidding embodiments, some or all of the client profile data may be sent to the asset data sources 130 when requesting bids. The asset data sources 130 may then utilize the client profile data to determine which real-time bids, if any, to send to asset server 110.

In an embodiment, data for an asset 112 may be sent along with the bid. This may be useful if, for instance, the asset data source 130 is bidding for a new asset 112 that was not previously uploaded to asset server 110, or if there has been a change to the asset's data. In some embodiments, the asset data may then be stored at the asset server 110 for subsequent re-use. The bid may or may not be stored with the asset data, depending on the embodiment. In other embodiments, the data for the asset 112 is not stored, as it is assumed that the new asset 112 is a "custom" asset 112, whose data the asset data source 130 generated dynamically for one-time use (e.g. based on context data from asset server 110). In yet other embodiments, the asset data source 130 may specify whether the data for the asset 112 should be stored at the asset server 110.

In an embodiment, each real-time bid includes a bid identifier. In some embodiments, particularly for embodiments where assets 112 are "ad hoc" assets generated solely for the corresponding bid, the bid identifier may be synonymous with the asset identifier.

In yet other embodiments, asset selector 114 may combine any or all of the above approaches to select an asset to deliver. For instance, client profile data may be used to identify a subset of acceptable assets 112, and a randomization algorithm may be used to select which of those assets 112 to serve. As another example, a bid for an asset 112 may be only one of a number of other factors-such as a predicted likelihood that the asset 112 will be viewed-based upon which a selection algorithm selects an ad to serve. In another embodiment, cost/benefit functions may be utilized to arbitrate between assets 112 from data sources 130 that do not participate in a bidding system, and those that do. The exact approach used by the asset selector 114 need not be limited to any specific considerations, so long as an asset 112 is selected from one of data sources 130.

### 2.5. BID / DELIVERY LOGGING

Asset server 110 further comprises a logging component 117. Logging component 117 is described herein as a delivery logging component, though it will be recognized that logging component may instead be viewed as a bid logging component in certain embodiments. Delivery logging component 117 is configured to, when asset server 110 sends assets 112 to clients 120, generate records of the delivered assets 112. A delivery record, or delivery log, may include a client request identifier, asset identifier, client identifier, timestamp, bid identifier, data indicating reasons why the asset 112 was selected for delivery, data indicating a context (e.g. web page) for the asset 112 being requested, and/or any other information associated with the delivery of the asset 112 to a particular client. Delivery logger 117 is configured to add the delivery record to delivery log queue 144. Delivery log queue may be a database, file system, or any other suitable repository for storing logs or records.

As mentioned, in an embodiment, logging component 117 functions as a real-time bid logger. The bid logger tracks bids from asset data sources 130 by creating records comprising at least bid identifiers and asset data source identifiers. The records may further include information such as the value of the bid, whether the bid was a "winning" bid, the time of the bid, tracking instructions associated with the bid, and so forth. In an embodiment, only winning bids are logged. In an embodiment, since winning bids correspond to assets 112 that are eventually delivered to clients 120, winning bid records within a log of bid records collectively constitute a delivery log queue 144 for the purposes described herein.

### 2.6. EVENTS

The occurrence of one or more actions at a client 120 with respect to an asset 112 forms an event. There may be different types of events, corresponding to different action types or combinations thereof. For instance, one event may be defined as a client displaying the asset 112 within a viewport or a certain area of the screen. Another event may be defined as a client playing the video contents of an asset 112. An event may indicate, for instance, how much of the asset 112 was presented. Another example of an event may be a user clicking on the asset 112. A variety of other events may be monitored for. In an embodiment, there may be only one event defined. Other embodiments may be limited to a specific number of events, while yet other embodiments may allow for any number of events.

The client 120 may be pre-configured to track events, or the asset 112 may include, reference, be loaded by, or otherwise be associated with instructions that define and monitor for events. For instance, in an embodiment, an application on the client 120 may request the asset 112 by use of a software development kit ("SDK") that has been installed on the client 120. The SDK may include instructions that monitor for events with respect to the asset 112. As another example, in an embodiment, a client 120 may load a JavaScript file that instructs the client to separately request an asset 112, insert and/or present that asset 112 in a web page, monitor for occurrences of events with respect to the asset 112, and track or report those events.

A client 120 is configured to record events in an event message 142, which the client may then return to the asset server 110. For embodiments where the client is configured to monitor for multiple events, the client 120 may send a single event message with multiple events, or may send separate event messages for each event. In addition to recording the type(s) of action that occurred during an event, an event log 122 may include various metadata concerning the event, such as an asset identifier, bid identifier, client identifier, transaction identifier, duration of the event, and so forth.

Asset server 110 further comprises an event listener component 118. Event listener component 118 monitors for incoming communications from clients 120 that include event messages 142. Event listener 118 stores these event messages 142 in an event message queue 146. Event listener 118 may optionally reformat the event messages in a custom format and/or filter the event messages 142 for specific business rules or other reasons. Event message queue 146 may be a database, file system, or any other suitable repository of data.

### 2.7. EVENT CORRELATOR

The entities responsible for operating asset data sources 130 may, for various reasons, be interested in information indicating when their specific assets 112 are delivered to clients 120 and/or when events occur with respect to those assets 112. While reporting the delivery of assets 112 based on the delivery log queue 144 may be fairly straightforward, reporting event messages 142 is less straightforward, particularly when event messages 142 are received asynchronously relative to the delivery of assets 112. For instance, a client may request a web page at one time, but a user may not click on an asset 112 embedded in the web page until a much later time.

In at least one embodiment, asset data sources 130 are only notified of delivery records related to their assets 112 when specific event(s) occur with respect to their assets 112. For instance, in one embodiment featuring a bidding system, an asset data source 130 may only be notified of winning bids associated with assets that have actually been viewed at a client. The asset data source 130 may then utilize this information to adjust future bids, determine how to compensate the operator of the asset server 110, and so forth.

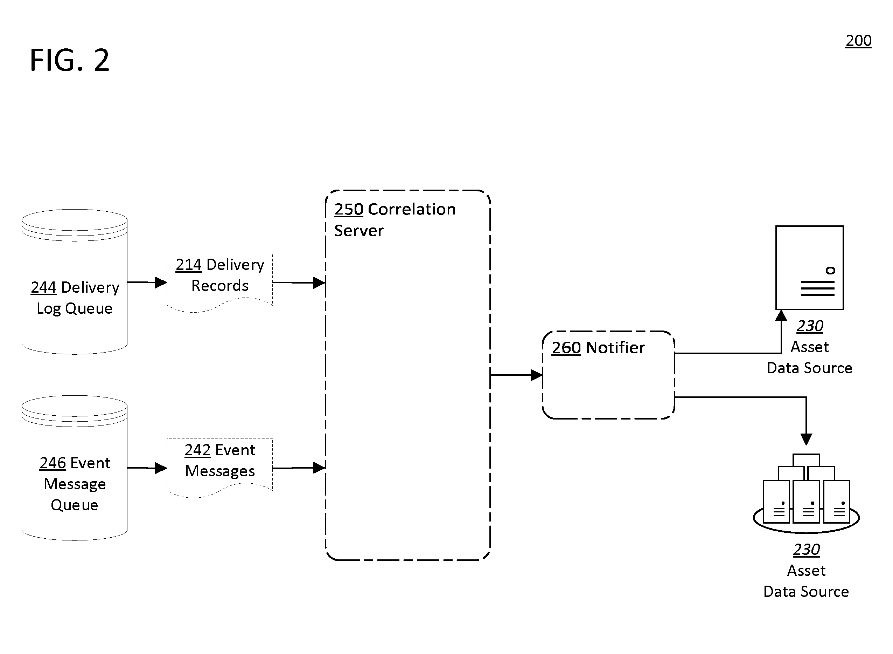

For this and other purposes, system 100 may be utilized in conjunction with an event correlation and notification system. FIG. 2 is an illustrative view of various aspects of an example event correlation and notification system 200 in which the techniques described herein may be practiced, according to an embodiment. System 200 may be the same system as system 100, or may be an entirely separate system, depending on the embodiment.

System 200 comprises a delivery log queue 244, such as delivery log queue 144. Delivery log queue comprises, at least, delivery records 214 of assets that have been delivered to clients, such as assets 112 delivered by one or more asset servers 110. System 200 further comprises an event message queue 246, such as event message queue 146. Event message queue 246 comprises event messages 242 describing events that have occurred relative to the assets whose deliveries are recorded in delivery records 214.

System 200 further comprises a correlation server 250. Correlation server 250 reads event messages 242 from the queue 246 as resources become available to correlation server 250, or waits for new messages 242 to appear in the queue 246 if none are available. In an embodiment, correlation server 250 may do so asynchronously to the time when the event messages 242 are recorded. Correlation server 250 then searches for delivery records 214 in delivery log queue 244 that match the event messages 242. An event message 242 may match a delivery record 214 when, for instance, they both specify a common client request identifier, asset delivery identifier, or bid identifier, or when they specify a same client identifier, timestamp, and asset identifier. An event message 242 that matches a delivery record 214 may be forwarded to notifier 260. Alternatively, only the delivery record 214 may be forwarded. Or, data of interest from both the event message 242 and the delivery record 214 may be merged into a bitmap or other suitable form and forwarded to notifier 260.

In an embodiment, correlation server 250 may further be configured to, once an event message 242 has been correlated to a delivery record 214, determine whether the event message 242 describes a type of event that needs to be reported for the corresponding asset. For instance, a set of one or more event types that require reporting may be described in campaign metadata for an asset, or in a bid record associated with the asset. That is, for example, when requesting that asset server 110 deliver a particular asset 112, an asset data source 130 may have specified that asset data source 130 will pay a certain amount if and only if a specific event, such as clicking or presenting, actually occurs with respect to the particular asset 112. Optionally, in an embodiment, the asset data source 130 may have bid different amounts for different types of events. The correlation sever forwards an event message 242 to notifier 260 only if the event message 242 describes a type of event that needs to be reported.

Events may not necessarily occur for each asset whose delivery is recorded in delivery records 214. For instance, an asset may never be viewed or clicked on at a client. Similarly, events may occur, but outside of an acceptable time frame. Accordingly, in an embodiment, an aging process at correlation server 250 identifies event messages 242 and delivery records 214 that are older than a threshold amount of time, such as an hour or twenty-four hours. These event messages 242 and delivery records 214 are discarded. The threshold amount of time may be, for example, global, specific to an asset data source identified in a delivery record, specified by the delivery record 214, or a function of a storage size allocated to delivery log queue 244 and/or event message queue 246. Similarly, different thresholds may be defined for delivery records 214 as opposed to event messages 242. In an embodiment, event messages 242 are deleted as soon as they are processed by correlation server 250, whereas delivery records 214 are deleted after a threshold amount of time. In an embodiment, delivery records 214 may also be discarded when correlated with an event message 242.

### 2.8. EVENT NOTIFIER

For event messages 242 that are correlated to delivery records 214, a notification component 260, also referred to as notifier 260, sends notification messages to asset data sources 230, which in some embodiments may include some or all of the same asset data sources 130 depicted in FIG. 1. The notification messages may include a variety of information, depending on the embodiment. For instance, a notification message may simply be an event message 242. As another example, a notification message may be simply be a delivery record 214. As yet other examples, a notification message may include any information found in a pair of correlated event messages 242 and delivery records 214, such as the bid identifier of the winning bid, an asset identifier, a timestamp of the delivery of the asset and/or one or more events, an event type, a bid amount, a client identifier, and/or any other suitable information.

In an embodiment, correlation server 250 places new notification messages, or information based upon which new notification messages may be generated, in a queue from which notifier 260 is configured to read. As resources become available, notifier 260 processes the notification reports and delivers them to the appropriate asset data sources 230. The notifier 260 may determine the asset data source 230 to notify based on an asset data source identifier in the delivery record 214, or based on one or more stored mappings of asset source identifiers to other types of identifier, such as asset identifiers or bid identifiers.

In an embodiment, notifier 260 may batch notification messages for a specific asset data source 230 and/or asset identifier in a queue until some threshold criteria has been met, such as an amount of messages, an elapsed amount of time, and so forth. In another embodiment, no batching is performed.

In an embodiment, multiple event messages 242 may be correlated to the same delivery record 214. In such an embodiment, notifier 260 may send the corresponding reports to asset data sources 230 as the notification messages are processed, wait a predefined period of time and then batch all reports processed for a given delivery record 214 over that period of time, and/or wait to send reports for a delivery record 214 until a report for a specific type of event is processed.

In an embodiment, instead of or in addition to sending reports to asset data sources 230, notifier 260 may send reports to any logging component, profiling system, accounting system, billing system, or other suitable system for a variety of purposes, such as for aggregation and reporting. For instance, the operator of asset server 110 may also operate a profiling system or accounting system to which notifier 260 reports for purposes such as training machine learning algorithms for selecting future assets or billing operators of asset data sources 230.

### 2.9. MISCELLANEOUS

Systems 100 and 200 comprise one or more computing devices. These one or more computing devices comprise any combination of hardware and software configured to implement the various logical components described herein, including components 110, 120, 130 and so forth. For example, the one or more computing devices may include one or more memories storing instructions for implementing the various components described herein, one or more hardware processors configured to execute the instructions stored in the one or more memories, and various data repositories in the one or more memories for storing data structures utilized and manipulated by the various components.

Systems 100 and 200 illustrate only one of many possible arrangements of components configured to provide the functionality described herein. Other arrangements may include fewer, additional, or different components, and the division of work between the components may vary depending on the arrangement. For example, in some embodiments, certain asset data sources 130 may be omitted, or the event message queue 146 may be omitted, along with any other components relied upon exclusively by the omitted component(s). As another example, there may be multiple asset servers 110, and many more asset data sources 230, assets 112, clients 120, and so forth.

In FIG. 1 and FIG. 2, the various components of systems 100 and 200 are depicted as being communicatively coupled to various other components by arrows. These arrows illustrate only certain examples of information flows between the components of systems 100 and 200. Neither the direction of the arrows nor the lack of arrow lines between certain components should be interpreted as indicating the existence or absence of communication between the certain components themselves. Indeed, each component of system 100 and 200 may feature an open port, API, or other suitable communication interface by which the component may become communicatively coupled to other components of system 100 or 200 as needed to accomplish any of the functions of system 100 or 200 described herein.

### 3.0. FUNCTIONAL OVERVIEW

### 3.1. EXAMPLE GENERAL FLOW

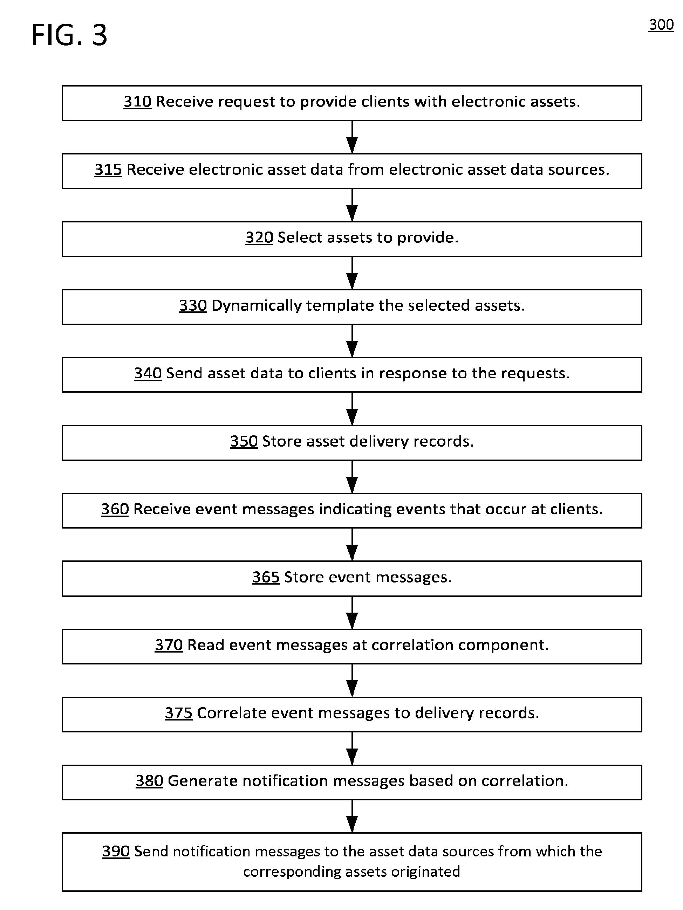

FIG. 3 illustrates an example flow 300 for delivering and tracking assets, according to an embodiment. The various elements of flow 300 may be performed in a variety of systems, including systems such as systems 100 and/or 200 described above. In an embodiment, each of the processes described in connection with the functional blocks described below may be implemented using one or more computer programs, other software elements, and/or digital logic in any of a general-purpose computer or a special-purpose computer, while performing data retrieval, transformation, and storage operations that involve interacting with and transforming the physical state of memory of the computer.

Block 310 comprises an asset server, such as asset server 110, receiving requests to provide clients, such as clients 120, with electronic assets, such as assets 112. The requests may originate directly from the clients and/or may originate from other servers that are in communication with the clients, depending on the embodiment. Also depending on the embodiment, requests may or may not identify specific assets whose provision is requested.

A request may further include various request metadata, such as, without limitation, fields of data embedded within a Hypertext Transport Protocol ("HTTP") query string or POST request. The request metadata may include a variety of context-indicating information, such as, without limitation: an identify of the client making the request; a type and/or version of the client; a document, application screen, or web page into which the requested asset will be inserted; a window or screen size for displaying the asset; a user identifier; a browsing history; and so forth. Context-indicating information may also or instead be determined by using identifiers in the request metadata to look up historical profiling or behavioral information collected by the asset server and/or other servers in previous interactions with the requesting client.

Block 315 comprises an asset server receiving from a plurality of electronic asset data sources, such as asset data sources 130, electronic asset data describing electronic assets. For instance, the asset server may comprise a bidding component by which asset data sources may submit asset data in response to client requests for assets, such as described in block 310. As another example, the asset server may include an asset submission component by which asset data sources may, at various times, upload new asset data to an asset database and/or update or remove previously submitted asset data.

Block 320 comprises the asset server selecting assets to provide, based on the requests. Assets may be selected from a local database and/or from external asset data sources, such as asset data sources 130. The selection of an asset for a given request may be performed in a variety of manners, depending on the embodiment and on the request. For instance, for requests that specify which asset to provide, the specified asset may be requested. For requests that include context-identifying information, various algorithms and/or rules may be employed to match the requests with assets. A variety of asset selection approaches are also described in other sections of this disclosure and in the referenced disclosures.

In an embodiment, the selection of an asset is based at least partially upon bids solicited via a bidding system. As described in other sections, each bid specifies an asset that the bid is for, either by an identifier that references previously saved asset data that is accessible to the asset server, or by specification of new asset data. Each bid further includes a bid value. In some embodiments, bids may further specify contexts to which they are applicable and/or rules for when the bid is to be considered. The asset server may select the bid having the highest applicable bid value, or utilize the bid value as one of a number features in any suitable selection algorithm or rule.

In some embodiments, the asset server solicits bids from asset data sources in response to each request. The asset server may optionally send context information to each bidding asset data source, based upon which the asset data sources may choose whether to respond with any bids. In some such embodiments, the asset server may also utilize bids received prior to receiving a request when selecting which asset to provide.

Block 330, which is optional, comprises dynamically templating some or all of the selected assets. The templating process may comprise, for instance, applying a template to asset data to render a presentable asset in a format suitable for display at a requesting client. Example suitable formats may include, without limitation, HTML, XML, JavaScript, image-based formats such as JPEG or GIF, PDF, or combinations thereof. Dynamic templating may also or instead comprise reformatting or otherwise customizing an asset that is already in a presentable form. The dynamic templating process need not necessarily be repeated each time a particular asset is selected, but rather dynamically-templated assets may in some embodiments be cached for a period of time for future use in similar contexts.

In an embodiment, the templating process may entail selecting or generating a template that is suitable for a context in which the asset will be displayed. For instance, a template may be chosen based on an analysis of a document, web page, or application screen in which the asset will be inserted. When an asset is requested for a specific context, if a template does not already exist for the context (or for a similar context), a new template may be generated for the context. Templates may then be cached for a period of time for future use with assets displayed in the same and/or similar contexts. Or, a new template may be created each time a request is received in association with the context.

The templating process may further comprise replacing variable elements within the selected or generated template with fields of asset data that have been mapped to those variable elements, thereby yielding an asset that conforms to the template.

In at least some embodiments, the dynamic templating process is performed at least partially by the client or an intermediary server as opposed to the asset server. For instance, the asset server may select or generate a template, and then send to the client the asset data and, if necessary, instructions for applying the template to the asset data. In yet other embodiments, the asset server may send the asset data to the client, and the client may execute instructions for generating a template for the appropriate context.

Additional examples of templating processes are described throughout this disclosure and in the referenced disclosures.

Block 340 comprises the asset server sending asset data for the selected assets to the clients in response to the requests. The asset data may be a presentable asset in a format suitable for presentation at the client. Alternatively, the asset data may include data fields comprising values that reference or represent information to be presented within the asset. The asset data may be accompanied by a template and/or instructions for rendering a presentable asset based upon the asset data.

Block 350 comprises the asset server storing delivery records that indicate the sending of asset data in block 340. The delivery records may be stored in, for instance, a delivery log queue such as delivery log queue 144. The delivery records may take variety of forms, depending on the embodiment. For instance, a delivery record may include an asset identifier and/or a bid identifier. The delivery records may or may not include specific details of each delivery, such as timestamps, client identifiers, context information, and so forth. The asset server may optionally send the delivery records to the corresponding data sources to inform the data sources when their assets are selected for delivery.

Block 360 comprises the asset server receiving event messages, such as event messages 142. Each event message indicates the occurrence of one or more events, at a client, in association with the client's presentation of an asset received from the asset server. The events may include displaying the asset, scrolling the asset into view, receiving user input clicking on or otherwise selecting the asset, or any other type of event described in this disclosure. In embodiments where multiple types of events are possible, the event messages may indicate which types of events occurred. The event messages further include identifiers or combinations of data fields that can be correlated to corresponding delivery records, such as a request identifier, bid identifier, a delivery record identifier, a combination of a timestamp and client identifier, and so forth. The event messages may further include other data such as an event time, user input, and so forth.

Clients may detect and report events in a variety of manners. For instance, in an embodiment, JavaScript code sent by the asset server may cause a client to monitor for events and send event messages in the form of HTTP request messages whenever an event is detected. Other examples of event detection and reporting mechanisms are also described herein. Note that, on account of monitored events often requiring some form of user interaction at the client, the events may occur at a variety of times relative to the clients receiving the asset data, and hence block 360 is typically performed asynchronously relative to blocks 340-350.

Block 365 comprises the asset server storing the event messages. For instance, the asset server may store the event messages in an event message queue such as event message queue 146.

Block 370 comprises a correlation component, such as correlation server 250, reading the event messages from storage. Block 375 comprises correlating event messages to the delivery records. Generally, correlating an event message to a delivery record involves reading certain delivery records from storage and comparing unique identifiers or data elements of the event message to those of each of the certain delivery records until a match is found. However, any suitable correlation mechanism may be used.

On account of aging mechanisms, storage limitations, business rules, and/or other factors, not all event messages may be correlated to delivery records. Those event messages that are not correlated are discarded. For those event messages that are correlated to delivery records, in block 380, notification messages are generated. A notification message may, for example, simply be a copy of the correlated event message or delivery record. Or, the notification message may combine or aggregate information from both the correlated event message and the correlated delivery record. The notification message may also or instead include information referenced by the correlated event message and the correlated delivery record. The correlation component may generate the notification message, or a separate notification component such as notifier 260 may generate the notification message.

Block 390 comprises a notification component sending the notification messages to the asset data sources from which the corresponding assets originated. The asset data sources may utilize the notification messages for a variety of purposes, such as tracking, generating future assets, determining future bids, and so forth.

Flow 300 is but one example of a process for delivery assets, according to an embodiment. Other flows are also possible, comprising fewer or additional elements in varying arrangements. Moreover, the functional blocks of flow 300 need not be performed sequentially. Indeed, many of the blocks may be performed concurrently. Thus, for example, while the asset server is responding one client's request for an asset, the correlation component may be correlating an event message from another client, while the notification component may be sending notification messages concerning assets viewed at yet other clients.

### 3.2. EXAMPLE BIDDING SYSTEM FLOW

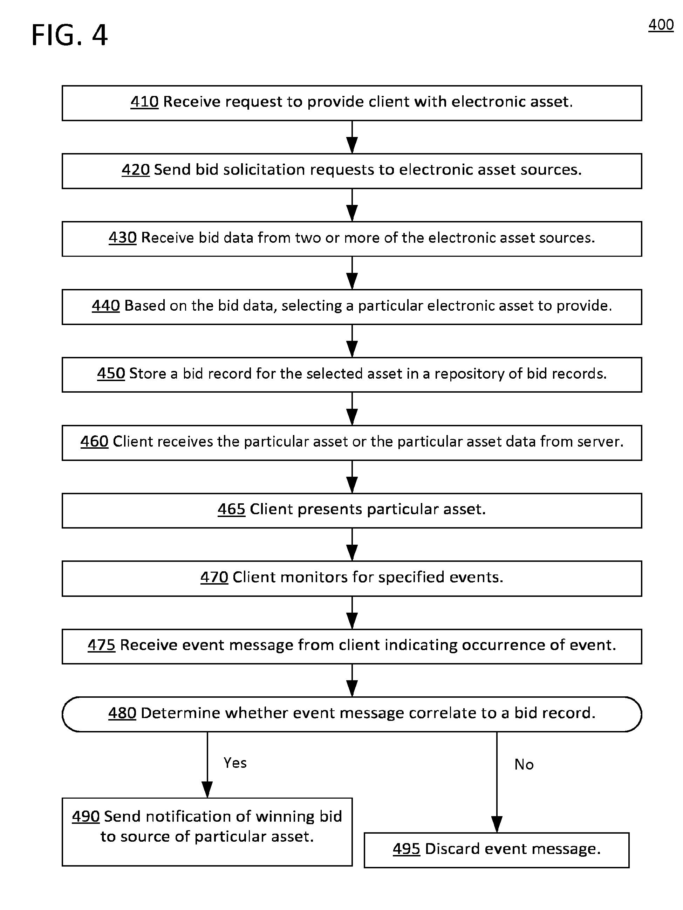

FIG. 4 illustrates an example flow 400 for delivering and tracking assets utilizing a bid-based asset selection technique, according to an embodiment. The various elements of flow 400 may be performed in a variety of systems, including systems such as systems 100 and/or 200 described above. In an embodiment, each of the processes described in connection with the functional blocks described below may be implemented using one or more computer programs, other software elements, and/or digital logic in any of a general-purpose computer or a special-purpose computer, while performing data retrieval, transformation, and storage operations that involve interacting with and transforming the physical state of memory of the computer.

Block 410 comprises an electronic asset server receiving an electronic asset request to provide a client device with an electronic asset selected by the electronic asset server. The request includes context data indicating a context in which the electronic assets is to be presented. The electronic access request may be an HTTP request or conform to any other suitable protocol. The context data may include, for instance, a client identifier, client version, screen size, or any other context information described herein. The electronic asset server may assign an identifier to the electronic asset request for subsequent correlation processes.

Block 420 comprises the electronic asset server sending one or more bid solicitation requests to electronic asset sources. The bid solicitation requests indicate one or more aspects of the context to the electronic asset sources. Solicitations may be sent to any or all available electronic asset sources. Bids may be sent directly to the electronic asset sources, or published or broadcast to a resource monitored by the electronic asset sources.

Block 430 comprises the electronic asset server receiving bid data from at least one of the electronic asset sources. In an embodiment, the electronic asset server receives bid data from two or more of the electronic asset sources. The electronic asset server may wait only a predefined period of time to accept bid data for the bid solicitation request, and ignore any bid data received after that predefined period. Or, the electronic asset server may wait to receive bid data from all electronic asset sources from which bids were solicited. The bid data collectively describes a plurality of bids. Each bid includes at least a bid identifier and a bid value. Each bid further includes or references electronic asset data describing a specific electronic asset associated with the bid identifier of the bid. In an embodiment, the asset data is "custom" asset data, in that the sending electronic asset source may have generated the asset data in response to the context information in the bid solicitation request. In an embodiment, the asset data may already be stored at the electronic asset server.

Block 440 comprises the electronic asset server, based at least partially on the bid data, selecting a particular electronic asset to provide to the client device. The bid for the selected particular electronic asset is referred to as the particular bid or the winning bid. The particular electronic asset is described by particular asset data associated with a particular bid value received from a particular electronic asset source.

Block 450 comprises the electronic asset server storing, in a repository of bid records, a particular bid record that includes at least a particular bid identifier for the selected particular electronic asset. The repository may include all bids, or just winning bids. The repository may take any suitable form, including a database, queue, list, and so forth.

Block 460 comprises the client device receiving the particular asset or the particular asset data from the electronic asset server. For tracking purposes, the client device may further receive various identifiers for the particular asset, such as an asset request identifier. Block 465 comprises the client device presenting the particular asset. Any suitable steps for presenting the particular asset may be taken, including rendering the particular asset from the particular asset data, inserting the particular asset data in a web page or document, displaying the rendered particular asset, playing media content in the particular asset, and so forth. Block 470 comprises the client device monitoring for specified event(s) to occur with respect to the particular asset, as described in other sections. The monitoring may be performed for different periods of time, depending on the embodiment.

Block 475 comprises the electronic asset server receiving an event message from the client device indicating the occurrence of an event at the client device with respect to the particular electronic asset. The event message may include any suitable information associated with the event, such as an event type, client identifier, asset request identifier, and so forth. The event message may be received after any amount of time subsequent to blocks 410-470.

Block 480 comprises the electronic asset server, based on one or more identifiers in the event message, determining whether the event message correlates to any of the bid records in the repository of bid records. This step may be necessary since the repository of bid records may periodically be pruned for various reasons described in other sections. Suitable correlation processes are described elsewhere in this disclosure. The event message need not necessarily be correlated as soon as it is received, but rather in some embodiments may sit in queue until there are sufficient system resources to read the event message and correlate the event message.

In response to correlating the particular winning bid record to the event message, block 490 comprises the electronic asset server sending a notification message comprising the particular bid identifier to the particular electronic asset source. Otherwise, block 495 comprises ignoring the event message.

Flow 400 is but one example of a process for delivery and tracking assets when a bid-based asset selection technique is utilized, according to an embodiment. Other flows that utilize a bid-based asset selection technique are also possible, comprising fewer or additional elements in varying arrangements. For instance, multiple events may be monitored for and multiple event messages may be received. Yet another variation is to solicit bids for types of contexts in advance of the electronic asset request.

### 4.0. EXAMPLE EMBODIMENTS

Examples of some embodiments are represented, without limitation, in the following numbered clauses:

A first method comprising: receiving, at an electronic asset server, from a plurality of electronic asset data sources, electronic asset data describing a plurality of electronic assets; receiving, at the electronic asset server, electronic asset requests to provide client devices with electronic assets; based on the electronic asset requests, the electronic asset server selecting particular assets of the plurality of electronic assets to provide to the client devices; sending, by the electronic asset server, particular asset data for the particular assets to the client devices in response to the electronic asset requests; storing, by the electronic asset server, delivery records that indicate the sending of the particular asset data for the particular assets to the client devices; receiving, at the electronic asset server, event messages from the client devices describing events that occur at the client devices with respect to the particular assets; correlating the event messages to corresponding delivery records; based on the correlated event messages and delivery records, sending notification messages indicating the occurrence of the events to the electronic asset data sources; wherein the method is performed by one or more computing devices.

A second method, as in the first method, further comprising: dynamically templating the particular assets based on viewing contexts at the client devices.

A third method, as in any of the first or second method, further comprising: receiving, from the electronic asset sources, bids for the electronic assets; selecting the electronic assets based upon the bids.

A fourth method, as in the third method, wherein the notification messages are messages indicating winning bids placed by the electronic asset data sources.

A fifth method, as in the fourth method, further comprising not sending a notification messages for winning bids to which no event message can be correlated within a specified period of time. Alternatively, a notification message may be sent after a specified period of time to indicate that no event message could be correlated to a winning bid.

A sixth method, as in any of the third through sixth methods, wherein the delivery records are records of winning bids, wherein the delivery records are stored in a repository of bid records from the plurality of assets.

A seventh method, as in any of the first through sixth methods, wherein correlating the event messages to the delivery record comprises searching, within the delivery records, for asset request identifiers specified by the event messages.

An eighth method, as in any of the first through seventh methods, further comprising: deleting certain delivery records after predefined periods, even if none of the event messages have been correlated to the certain delivery records; wherein no notification message is sent when an event message cannot be correlated to any undeleted delivery record.

A ninth method, as in any of the first through eighth methods, further comprising receiving client context data in the electronic asset requests, and selecting the particular assets based at least partially on the client context data.

A tenth method, as in any of the first through ninth methods, wherein the electronic asset data includes, for each electronic asset in the plurality of electronic assets, a title, description, hyperlink, and a media item or reference to the media item.

An eleventh method, as in any of the first through tenth methods, further comprising the electronic asset server sending instructions to at least first client devices that, when executed by the first client devices, cause the first client devices to monitor for the events and send the event messages in response to detecting the events.

A twelfth method, as in any of the first through tenth methods, further comprising the electronic asset server sending instructions to at least first client devices that, when executed by the first client devices, cause the first client devices send the electronic asset requests.

A thirteenth method, as in any of the eleventh or twelfth methods, wherein the instructions are sent to the first client devices in JavaScript code referenced by web pages being viewed at the first client devices, wherein the JavaScript code further instructs the client devices to insert and render the particular electronic assets within the web pages, based on the particular asset data.

A fourteenth method, which may be used in conjunction with or even overlap in steps with the first through thirteenth methods, comprising: receiving, at an electronic asset server, an electronic asset request to provide a client device with an electronic asset selected by the electronic asset server, the request including context data indicating a context in which the electronic asset is to be presented; sending, by the electronic asset server, one or more bid solicitation requests to electronic asset sources, the bid solicitation requests indicating one or more aspects of the context to the electronic asset sources; receiving bid data from two or more of the electronic asset sources, the bid data describing a plurality of bids, each bid of the plurality of bids including a bid identifier and bid value, and further including or referencing electronic asset data describing a specific electronic asset associated with the bid identifier; based at least partially on the bid data, selecting a particular electronic asset to provide to the client device, the particular electronic asset described by particular electronic asset data associated with a particular bid value received from a particular electronic asset source; storing, in a repository of bid records, a particular bid record that includes at least a particular bid identifier for the selected particular electronic asset; receiving an event message indicating the occurrence of an event at the client device with respect to the particular electronic asset; based on one or more identifiers in the event message, determining whether the event message correlates to any of the bid records in the repository of bid records; in response to correlating the particular winning bid record to the event message, sending a notification message comprising the particular bid identifier to the particular electronic asset source.

A fifteenth method, as in the fourteenth method, further comprising periodically deleting certain bid records that are older than a specified amount of time from the repository of bid records.

A sixteenth method, as in any of the fourteenth through fifteenth methods, wherein the particular electronic asset is rendered according to a template that is dynamically selected or generated based on the context.

A seventeenth method, as in any of the fourteenth through sixteenth methods, further comprising the electronic asset server sending the particular electronic asset data or the particular electronic asset to the client device.

An eighteenth method, as in any of the fourteenth through seventeenth methods, wherein the client device is configured to render a presentation of the particular electronic asset based upon the particular asset data.

A nineteenth method, as in any of the fourteenth through eighteenth methods, further comprising receiving the electronic asset data for each bid with the bid data for each bid.

A twentieth method, as in any of the fourteenth through nineteenth methods, wherein the particular electronic asset data includes a title, description, hyperlink, and a media item or reference to the media item.

A twenty-first method, as in any of the fourteenth through twentieth methods, further comprising assigning a request identifier to the electronic asset request, storing the request identifier with the bid identifier, sending the request identifier to the client device in association with the particular electronic asset, receiving the request identifier in the event message, and correlating based upon the request identifier.

A twenty-second method, as in any of the fourteenth through twenty-first methods, further comprising the electronic asset server sending instructions to the client device that, when executed by the client device, cause the client device to monitor for the event and send the event message in response to detecting the event.

A twenty-third method, as in any of the fourteenth through twenty-second methods, further comprising the electronic asset server sending instructions to the client device that, when executed by the client device, cause the client device to send the electronic asset request, monitor for the event, and send the event message in response to detecting the event.

A twenty-fourth method, as in any of the twenty-second or twenty-third methods, wherein the instructions are sent to the client devices in JavaScript code referenced by a web page being viewed at the first client device, wherein the JavaScript code further instructs the client device to insert and render the particular electronic asset within the web page, based on the particular asset data.

Other examples of these and other embodiments are found throughout this disclosure.

### 5.0. IMPLEMENTATION MECHANISM-HARDWARE OVERVIEW

According to one embodiment, the techniques described herein are implemented by one or more special-purpose computing devices. The special-purpose computing devices may be desktop computer systems, portable computer systems, handheld devices, networking devices or any other device that incorporates hard-wired and/or program logic to implement the techniques. The special-purpose computing devices may be hard-wired to perform the techniques, or may include digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques.

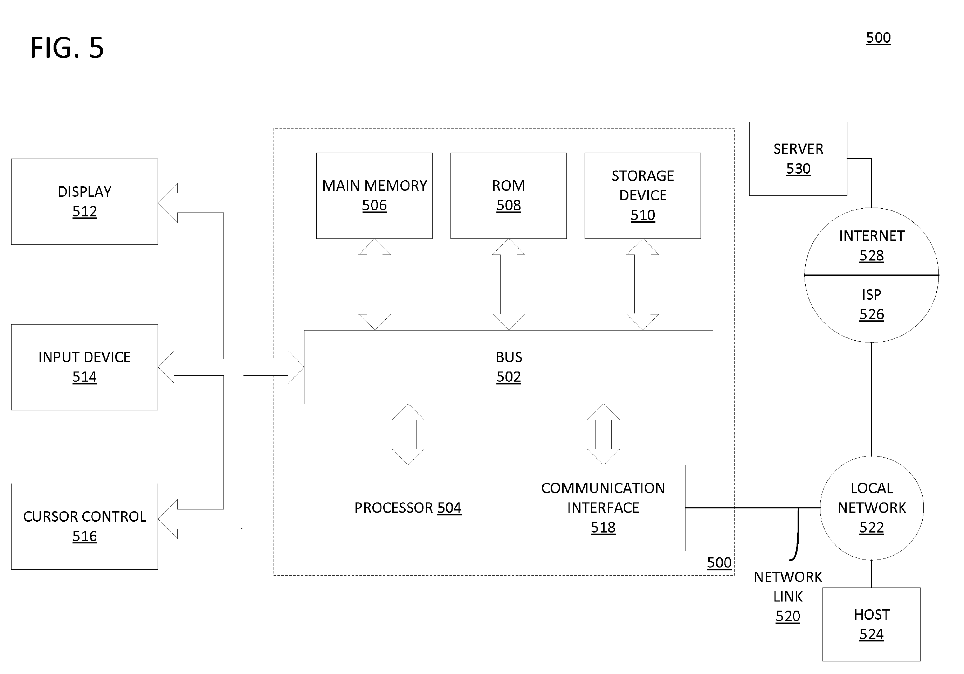

FIG. 5 is a block diagram that illustrates a computer system 500 utilized in implementing the above-described techniques, according to an embodiment. Computer system 500 may be, for example, a desktop computing device, laptop computing device, tablet, smartphone, server appliance, computing mainframe, multimedia device, handheld device, networking apparatus, or any other suitable device.

Computer system 500 includes one or more busses 502 or other communication mechanism for communicating information, and one or more hardware processors 504 coupled with busses 502 for processing information. Hardware processors 504 may be, for example, a general purpose microprocessor. Busses 502 may include various internal and/or external components, including, without limitation, internal processor or memory busses, a Serial ATA bus, a PCI Express bus, a Universal Serial Bus, a HyperTransport bus, an Infiniband bus, and/or any other suitable wired or wireless communication channel.

Computer system 500 also includes a main memory 506, such as a random access memory (RAM) or other dynamic or volatile storage device, coupled to bus 502 for storing information and instructions to be executed by processor 504. Main memory 506 also may be used for storing temporary variables or other intermediate information during execution of instructions to be executed by processor 504. Such instructions, when stored in non-transitory storage media accessible to processor 504, render computer system 500 into a special-purpose machine that is customized to perform the operations specified in the instructions.

Computer system 500 further includes one or more read only memories (ROM) 508 or other static storage devices coupled to bus 502 for storing static information and instructions for processor 504. One or more storage devices 510, such as a solid-state drive (SSD), magnetic disk, optical disk, or other suitable non-volatile storage device, is provided and coupled to bus 502 for storing information and instructions.

Computer system 500 may be coupled via bus 502 to one or more displays 512 for presenting information to a computer user. For instance, computer system 500 may be connected via an High-Definition Multimedia Interface (HDMI) cable or other suitable cabling to a Liquid Crystal Display (LCD) monitor, and/or via a wireless connection such as peer-to-peer Wi-Fi Direct connection to a Light-Emitting Diode (LED) television. Other examples of suitable types of displays 512 may include, without limitation, plasma display devices, projectors, cathode ray tube (CRT) monitors, electronic paper, virtual reality headsets, braille terminal, and/or any other suitable device for outputting information to a computer user. In an embodiment, any suitable type of output device, such as, for instance, an audio speaker or printer, may be utilized instead of a display 512.

One or more input devices 514 are coupled to bus 502 for communicating information and command selections to processor 504. One example of an input device 514 is a keyboard, including alphanumeric and other keys. Another type of user input device 514 is cursor control 516, such as a mouse, a trackball, or cursor direction keys for communicating direction information and command selections to processor 504 and for controlling cursor movement on display 512. This input device typically has two degrees of freedom in two axes, a first axis (e.g., x) and a second axis (e.g., y), that allows the device to specify positions in a plane. Yet other examples of suitable input devices 514 include a touch-screen panel affixed to a display 512, cameras, microphones, accelerometers, motion detectors, and/or other sensors. In an embodiment, a network-based input device 514 may be utilized. In such an embodiment, user input and/or other information or commands may be relayed via routers and/or switches on a Local Area Network (LAN) or other suitable shared network, or via a peer-to-peer network, from the input device 514 to a network link 520 on the computer system 500.

A computer system 500 may implement techniques described herein using customized hard-wired logic, one or more ASICs or FPGAs, firmware and/or program logic which in combination with the computer system causes or programs computer system 500 to be a special-purpose machine. According to one embodiment, the techniques herein are performed by computer system 500 in response to processor 504 executing one or more sequences of one or more instructions contained in main memory 506. Such instructions may be read into main memory 506 from another storage medium, such as storage device 510. Execution of the sequences of instructions contained in main memory 506 causes processor 504 to perform the process steps described herein. In alternative embodiments, hard-wired circuitry may be used in place of or in combination with software instructions.

The term "storage media" as used herein refers to any non-transitory media that store data and/or instructions that cause a machine to operate in a specific fashion. Such storage media may comprise non-volatile media and/or volatile media. Non-volatile media includes, for example, optical or magnetic disks, such as storage device 510. Volatile media includes dynamic memory, such as main memory 506. Common forms of storage media include, for example, a floppy disk, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge.

Storage media is distinct from but may be used in conjunction with transmission media. Transmission media participates in transferring information between storage media. For example, transmission media includes coaxial cables, copper wire and fiber optics, including the wires that comprise bus 502. Transmission media can also take the form of acoustic or light waves, such as those generated during radio-wave and infra-red data communications.

Various forms of media may be involved in carrying one or more sequences of one or more instructions to processor 504 for execution. For example, the instructions may initially be carried on a magnetic disk or solid state drive of a remote computer. The remote computer can load the instructions into its dynamic memory and use a modem to send the instructions over a network, such as a cable network or cellular network, as modulate signals. A modem local to computer system 500 can receive the data on the network and demodulate the signal to decode the transmitted instructions. Appropriate circuitry can then place the data on bus 502. Bus 502 carries the data to main memory 506, from which processor 504 retrieves and executes the instructions. The instructions received by main memory 506 may optionally be stored on storage device 510 either before or after execution by processor 504.

A computer system 500 may also include, in an embodiment, one or more communication interfaces 518 coupled to bus 502. A communication interface 518 provides a data communication coupling, typically two-way, to a network link 520 that is connected to a local network 522. For example, a communication interface 518 may be an integrated services digital network (ISDN) card, cable modem, satellite modem, or a modem to provide a data communication connection to a corresponding type of telephone line. As another example, the one or more communication interfaces 518 may include a local area network (LAN) card to provide a data communication connection to a compatible LAN. As yet another example, the one or more communication interfaces 518 may include a wireless network interface controller, such as a 802.11-based controller, Bluetooth controller, Long Term Evolution (LTE) modem, and/or other types of wireless interfaces. In any such implementation, communication interface 518 sends and receives electrical, electromagnetic, or optical signals that carry digital data streams representing various types of information.

Network link 520 typically provides data communication through one or more networks to other data devices. For example, network link 520 may provide a connection through local network 522 to a host computer 524 or to data equipment operated by a Service Provider 526. Service Provider 526, which may for example be an Internet Service Provider (ISP), in turn provides data communication services through a wide area network, such as the world wide packet data communication network now commonly referred to as the "Internet" 528. Local network 522 and Internet 528 both use electrical, electromagnetic or optical signals that carry digital data streams. The signals through the various networks and the signals on network link 520 and through communication interface 518, which carry the digital data to and from computer system 500, are example forms of transmission media.

In an embodiment, computer system 500 can send messages and receive data, including program code and/or other types of instructions, through the network(s), network link 520, and communication interface 518. In the Internet example, a server 530 might transmit a requested code for an application program through Internet 528, ISP 526, local network 522 and communication interface 518. The received code may be executed by processor 504 as it is received, and/or stored in storage device 510, or other non-volatile storage for later execution. As another example, information received via a network link 520 may be interpreted and/or processed by a software component of the computer system 500, such as a web browser, application, or server, which in turn issues instructions based thereon to a processor 504, possibly via an operating system and/or other intermediate layers of software components.

In an embodiment, some or all of the systems described herein may be or comprise server computer systems, including one or more computer systems 500 that collectively implement various components of the system as a set of server-side processes. The server computer systems may include web server, application server, database server, and/or other conventional server components that certain above-described components utilize to provide the described functionality. The server computer systems may receive network-based communications comprising input data from any of a variety of sources, including without limitation user-operated client computing devices such as desktop computers, tablets, or smartphones, remote sensing devices, and/or other server computer systems.

In an embodiment, certain server components may be implemented in full or in part using "cloud"-based components that are coupled to the systems by one or more networks, such as the Internet. The cloud-based components may expose interfaces by which they provide processing, storage, software, and/or other resources to other components of the systems. In an embodiment, the cloud-based components may be implemented by third-party entities, on behalf of another entity for whom the components are deployed. In other embodiments, however, the described systems may be implemented entirely by computer systems owned and operated by a single entity.

In an embodiment, an apparatus comprises a processor and is configured to perform any of the foregoing methods. In an embodiment, a non-transitory computer readable storage medium, storing software instructions, which when executed by one or more processors cause performance of any of the foregoing methods.

### 6.0. EXTENSIONS AND ALTERNATIVES

As used herein, the terms "first," "second," "certain," and "particular" are used as naming conventions to distinguish queries, plans, representations, steps, objects, devices, or other items from each other, so that these items may be referenced after they have been introduced. Unless otherwise specified herein, the use of these terms does not imply an ordering, timing, or any other characteristic of the referenced items.

In the foregoing specification, embodiments of the invention have been described with reference to numerous specific details that may vary from implementation to implementation. Thus, the sole and exclusive indicator of what is the invention, and is intended by the applicants to be the invention, is the set of claims that issue from this application, in the specific form in which such claims issue, including any subsequent correction. In this regard, although specific claim dependencies are set out in the claims of this application, it is to be noted that the features of the dependent claims of this application may be combined as appropriate with the features of other dependent claims and with the features of the independent claims of this application, and not merely according to the specific dependencies recited in the set of claims. Moreover, although separate embodiments are discussed herein, any combination of embodiments and/or partial embodiments discussed herein may be combined to form further embodiments.

Any definitions expressly set forth herein for terms contained in such claims shall govern the meaning of such terms as used in the claims. Hence, no limitation, element, property, feature, advantage or attribute that is not expressly recited in a claim should limit the scope of such claim in any way. The specification and drawings are, accordingly, to be regarded in an illustrative rather than a restrictive sense.

## Claims

1. A system comprising:
an asset server configured to receive, from a plurality of electronic asset data sources, electronic asset data describing a plurality of electronic assets, and to receive electronic asset requests to provide client devices with electronic assets;
an asset selector configured to, based on the electronic asset requests, select particular assets of the plurality of electronic assets to provide to the client devices;
wherein the asset server is further configured to send particular asset data for the particular assets that were selected by the asset selector to the client devices in response to the electronic asset requests;
a delivery log queue configured to store delivery records that indicate the sending of the particular asset data for the particular assets to the client devices;
an event listener configured to receive event messages from the client devices describing events that occur at the client devices with respect to the particular assets;
an event message queue configured to store the event messages;
a correlation component configured to correlate the event messages to corresponding delivery records;
a notification component configured to, based on the correlated event messages and delivery records, send notification messages indicating the occurrence of the events to the electronic asset data sources.

2. The system of Claim 1, wherein the asset selector is further configured to solicit, from the electronic asset sources, bids for providing specific electronic assets in response to specified electronic asset requests, and to select the electronic assets based upon the bids.

3. The system of any of Claims 1-2, wherein the notification messages are messages indicating winning bids placed by the electronic asset data sources have won.

4. The system of any of Claims 1-3, further comprising an asset templating component configured to dynamically template the particular assets based on viewing contexts at the client devices.

5. The system of any of Claims 1-4, further comprising a delivery record pruning component configured to delete certain delivery records after predefined periods.

6. The system of any of Claims 1-5, wherein the electronic asset data includes, for each electronic asset in the plurality of electronic assets, a title, description, hyperlink, and a media item or reference to the media item.

7. A method comprising:
receiving, at an electronic asset server, an electronic asset request to provide a client device with an electronic asset selected by the electronic asset server, the request including context data indicating a context in which the electronic asset is to be presented;
sending, by the electronic asset server, one or more bid solicitation requests to electronic asset sources, the bid solicitation requests indicating one or more aspects of the context to the electronic asset sources;
receiving bid data from two or more of the electronic asset sources, the bid data describing a plurality of bids, each bid of the plurality of bids including a bid identifier and bid value, and further including or referencing electronic asset data describing a specific electronic asset associated with the bid identifier;
based at least partially on the bid data, selecting a particular electronic asset to provide to the client device, the particular electronic asset described by particular electronic asset data associated with a particular bid value received from a particular electronic asset source;
storing, in a repository of bid records, a particular bid record that includes at least a particular bid identifier for the selected particular electronic asset;
receiving an event message indicating the occurrence of an event at the client device with respect to the particular electronic asset;
based on one or more identifiers in the event message, determining whether the event message correlates to any of the bid records in the repository of bid records;
in response to correlating the particular winning bid record to the event message, sending a notification message comprising the particular bid identifier to the particular electronic asset source.

8. The method of Claim 7, further comprising periodically deleting certain bid records that are older than a specified amount of time from the repository of bid records.

9. The method of any of Claims 7-8, wherein the particular electronic asset is rendered according to a template that is dynamically selected or generated based on the context.

10. The method of any of Claims 7-9, wherein the client device is configured to render a presentation of the particular electronic asset based upon the particular asset data.

11. The method of any of Claims 7-10, further comprising receiving the electronic asset data for each bid with the bid data for each bid.

12. The method of any of Claims 7-11, wherein the particular electronic asset data includes a title, description, hyperlink, and a media item or reference to the media item.

13. The method of any of Claims 7-12, further comprising the electronic asset server sending instructions to the client device that, when executed by the client device, cause the client device to monitor for the event and send the event message in response to detecting the event.

14. The method of Claim 13, wherein the instructions are sent to the client device in JavaScript code referenced by one or more web pages being viewed at the client device, wherein the JavaScript code further instructs the client device to insert and render the particular electronic assets within the one or more web pages, based on the particular asset data.

15. One or more transitory or non-transitory computer-readable media storing instructions that, when executed by one or more computing devices, cause performance of the operations recited in any of Claims 7-14.
